# EUROPÄISCHE PATENTSCHRIFT

(11) **EP 2 549 240 B1**
(45) Veröffentlichungstag und Bekanntmachung des Hinweises auf die Patenterteilung: **25.07.2018**
(21) Anmeldenummer: 12164854.7
(22) Anmeldetag: 20.04.2012
(51) Int. Cl.: G01D 5/347, G01D 5/244, G01B 5/00

(54) **Längenmesseinrichtung**
Length measuring device
Dispositif de mesure de longueur

(30) Priorität: 20.07.2011 DE 102011079464
(43) Veröffentlichungstag der Anmeldung: 23.01.2013
(73) Patentinhaber: Dr. Johannes Heidenhain GmbH, 83301 Traunreut (DE)
(72) Erfinder: Kummetz, Jens, Dr., 83278 Traunstein (DE); Geyermann, Dirk, 83377 Vachendorf (DE); Seichter, Martin, 83379 Wonneberg (DE)

(56) Entgegenhaltungen:
- EP-A1- 2 325 610
- EP-A2- 0 348 660
- DE-A1- 4 318 017
- DE-A1-102005 027 025

## Beschreibung

Die Erfindung betrifft eine Längenmesseinrichtung zur Messung der Position zweier relativ zueinander verschiebbarer Objekte. Zum Schutz des Maßstabes ist dieser innerhalb eines Hohlprofils der Längenmesseinrichtung in Messrichtung verlaufend angeordnet. Derartige Längenmesseinrichtungen dienen zur Messung von Längen, Wegen bzw. Positionen und werden insbesondere bei Bearbeitungsmaschinen zur Messung der Relativbewegung eines Werkzeugs bezüglich eines zu bearbeitenden Werkstücks, bei Koordinatenmessmaschinen und vermehrt auch in der Halbleiterindustrie eingesetzt.

Oft ist es erforderlich, dass die Längenmesseinrichtung zur Messung besonders langer Wege über mehrere Meter ausgebildet ist. Eine derartige Längenmesseinrichtung ist beispielsweise in der DE 43 18 017 A1 beschrieben. Die Längenmesseinrichtung besteht dabei aus mehreren Teilstücken in Form von in Messrichtung hintereinander angeordneten Hohlprofilen. Ein Maßstab in Form eines Maßbandes verläuft in einer Nut der Hohlprofile über alle Hohlprofile hinweg und ist über ein Befestigungselement innerhalb des Messbereichs an einem der Hohlprofile geklemmt. Dieses Hohlprofil ist wiederum mittels Schrauben am zu messenden Objekt ortsfest fixiert. Weiterhin ist dieses Hohlprofil endseitig über elastische Dichtungen mit den anschließenden Hohlkörpern verbunden, was eine gewisse mechanische Entkopplung bewirkt. Das Maßband ist an seinen Enden mittels einer Spannvorrichtung über seine Länge gespannt und mittels der Spannvorrichtung an beiden Enden am zu messenden Objekt ortsfest fixiert.

Nachteilig dabei ist, dass die endseitigen Dichtungen einerseits die Hohlprofile gegenseitig sicher abdichten müssen und andererseits eine mechanische Entkopplung ermöglichen müssen. Die Dichtungen verursachen daher relativ große Gegenkräfte auf das Befestigungselement, was die Messgenauigkeit negativ beeinflusst. Das Dokument DE102005027025 offenbart eine Längenmesseinrichtung gemäß dem Stand der Technik. Der Erfindung liegt daher die Aufgabe zugrunde, eine gut handzuhabende und stabile Längenmesseinrichtung zu schaffen, welche eine hohe Messgenauigkeit aufweist.

Diese Aufgabe wird erfindungsgemäß durch die Merkmale des Anspruchs 1 gelöst.

In den abhängigen Ansprüchen sind vorteilhafte Ausgestaltungen der Erfindung angegeben.

Gemäß der Erfindung weist die Längenmesseinrichtung zur Messung der Position zweier relativ zueinander verschiebbarer Objekte ein Hohlprofil auf, in dessen Innenraum ein Maßstab angeordnet ist. Die Längenmesseinrichtung umfasst weiterhin ein Befestigungselement, das einen ersten Abschnitt aufweist, der dazu ausgelegt ist, einerseits den Maßstab ortsfest daran festzulegen und andererseits den ersten Abschnitt an einem der zu messenden Objekte ortsfest zu fixieren. Das Befestigungselement weist ferner zumindest einen zweiten Abschnitt auf, mit dem es am Hohlprofil befestigt ist. Zwischen dem ersten Abschnitt und dem zweiten Abschnitt des Befestigungselementes ist zumindest ein Längenausgleichselement vorgesehen, das dazu ausgebildet ist, Bewegungen des ersten Abschnittes relativ zum zweiten Abschnitt in Messrichtung zu ermöglichen.

Das zumindest eine Längenausgleichselement ist in vorteilhafter Weise eine Anordnung von Festkörpergelenken. Jedes dieser Festkörpergelenke erlaubt eine Relativbewegung zwischen dem ersten Abschnitt und dem zweiten Abschnitt durch Biegung und ist ausgebildet als Verbindungsbereich zwischen dem ersten und dem zweiten Abschnitt mit verminderter Biegesteifigkeit.

Der Ort der festen Fixierung des ersten Abschnitts an dem zu messenden Objekt bildet den Bezugspunkt der Längenmesseinrichtung relativ zum messenden Objekt in Messrichtung. Ortsfest bedeutet dabei eine in Messrichtung X unverschiebliche Befestigung.

Durch die Erfindung ist eine Entkopplung des Befestigungselementes vom Hohlprofil gewährleistet, so dass keine Gegenkräfte auf das Befestigungselement einwirken. Damit wird eine hohe Messgenauigkeit, insbesondere Reproduzierbarkeit der Positionsmessung sowie eine gute thermische Stabilität des Bezugspunktes erreicht.

Das Hohlprofil ist mit dem Befestigungselement handhabbar, was die Montage am zu messenden Objekt vereinfacht.

Das Material des Hohlprofils besteht in der Regel aus einem Material, beispielsweise Aluminium, das einen größeren thermischen Ausdehnungskoeffizienten aufweist als das Material des Befestigungselementes. Als Material für das Befestigungselement eignet sich Stahl oder ein sogenanntes Nullausdehnungsmaterial, wie INVAR. Durch die Erfindung ist eine thermisch bedingte Ausdehnbarkeit des Hohlprofils gewährleistet, ohne dass unzulässige Kräfte vom Hohlprofil auf das Befestigungselement und somit den Bezugspunkt einwirken, durch welche die Genauigkeit der Längenmesseinrichtung nachteilig beeinflusst werden könnte.

Das erfindungsgemäße Befestigungselement ist in ein Hohlprofil integriert und mit diesem zusammen einfach handhabbar. Dies ist auch besonders vorteilhaft, wenn die Längenmesseinrichtung mehrere in Messrichtung hintereinander angeordnete Hohlprofile umfasst, die an ihren Verbindungsstellen jeweils mittels elastischer Dichtmittel abgedichtet sind, und sich der Maßstab über die mehreren Hohlprofile erstreckt, wobei eines dieser Hohlprofile das Befestigungselement aufweist. Die Funktion der stirnseitigen Abdichtung und der mechanischen Entkopplung ist getrennt und somit kann das Dichtmittel sowie das Befestigungselement mit integrierter Entkopplung jeweils individuell optimiert ausgelegt werden.

Der Maßstab ist vorzugsweise über seine gesamte Länge ausschließlich am Befestigungselement in Messrichtung ortsfest festgelegt und ansonsten, also beidseits des Befestigungselementes verlaufend, längsverschiebbar gegenüber den mehreren Hohlprofilen sowie gegenüber dem zu messenden Objekt angeordnet. Diese Längsverschiebbarkeit kann durch einfache Auflage des Maßstabs an den Hohlprofilen erfolgen, wobei die Reibung zwischen dem Maßstab und den Hohlprofilen durch zusätzliche Maßnahmen, wie z.B. eine elastische Zwischenschicht, vermindert werden kann.

Das zumindest eine Längenausgleichselement ist insbesondere derart ausgebildet, dass es Bewegungen des ersten Abschnittes relativ zum zweiten Abschnitt ausschließlich in Messrichtung zulässt und Bewegungen in allen anderen Richtungen, also in den restlichen 5 Freiheitsgraden, sperrt, wodurch eine hohe Vibrationsfestigkeit der Längenmesseinrichtung gewährleistet ist. Das zumindest eine Längenausgleichselement kann als reibungsarme Linearführung ausgebildet sein. Besonders vorteilhaft ist das zumindest eine Längenausgleichselement eine Anordnung von Festkörpergelenken. Die Festkörpergelenke weisen jeweils einen senkrecht zur Messrichtung verlaufenden Steg auf, der zwischen dem ersten Abschnitt und dem zweiten Abschnitt verläuft. Der Steg ist mit einem Ende am ersten Abschnitt und am zweiten Ende mit dem zweiten Abschnitt des Befestigungselementes verbunden, insbesondere daran einstückig angeformt. Der Steg ist ausschließlich in Messrichtung auslenkbar.

Besonders vorteilhaft ist, wie in dem nachfolgend beschriebenen Ausführungsbeispiel näher erläutert, wenn der Maßstab mittels einer ersten Führung im Hohlprofil in Messrichtung geführt ist. Diese erste Führung ist vorzugsweise eine in das Hohlprofil eingebrachte Nut, in welcher der Maßstab in Messrichtung reibungsarm verschiebbar gelagert ist. Die erste Führung ist insbesondere dazu ausgelegt, den Maßstab in den restlichen 5 Freiheitsgraden festzulegen.

Eine zweite Führung in Messrichtung bildet das zumindest eine Längenausgleichselement. Diese zweite Führung führt das Hohlprofil am Befestigungselement in Messrichtung. Auch diese zweite Führung ist insbesondere dazu ausgelegt, das Hohlprofil in den restlichen 5 Freiheitsgraden festzulegen.

Der Maßstab ist vorzugsweise an jeder beliebigen Position am Befestigungselement festlegbar und die Befestigung ist weiterhin vorzugsweise wieder rückstandsfrei lösbar. Hierzu ist der erste Abschnitt des Befestigungselements insbesondere dazu ausgelegt, den Maßstab durch Klemmung an diesem ersten Abschnitt ortsfest zu fixieren. Die Klemmung hat den Vorteil, dass der Maßstab bei Bedarf vom Befestigungselement gelöst werden kann. Der Klemmmechanismus ist von außen zugänglich und aktivierbar.

Der erste Abschnitt weist vorzugsweise quer zur Messrichtung voneinander beabstandete Auflagen zur Auflage des Maßstabes mit seiner Unterseite auf, wobei der Maßstab zwischen den beiden Auflagen freiliegt. Der erste Abschnitt weist darüber hinaus zwei quer zur Messrichtung X voneinander beabstandete Widerlager auf, die bei der Klemmung mit der Oberseite des Maßstabs in Kontakt treten und den Maßstab zwischen den Auflagen und den Widerlagern einklemmen. Diese Widerlager sind in Form von den Maßstab an den Rändern umgreifende Falze ausgebildet, welche die Messteilung des Maßstabs zur Abtastung frei lassen.

Zum ortsfesten Fixieren des ersten Abschnitts am zu messenden Objekt weist dieser beispielsweise eine Bohrung zur Aufnahme einer Schraube auf, die bei der ortsfesten Fixierung des ersten Abschnitts mit dem zu messenden Objekt korrespondiert, indem sie dort beispielsweise eingeschraubt ist.

Der zweite Abschnitt kann zwei in Messrichtung X voneinander beabstandete Teilabschnitte umfassen, wobei jeweils zwischen einem der beiden Teilabschnitte und dem ersten Abschnitt ein Längenausgleichselement, insbesondere in Form zumindest eines Festkörpergelenkes, vorgesehen ist. Jeder der Teilabschnitte ist durch Schrauben an dem Hohlprofil befestigt.

Der Maßstab ist vorzugsweise ein Maßband, das längsstabil aber biegbar ist, insbesondere ein Stahlband.

Die Erfindung wird anhand von Ausführungsbeispielen näher erläutert.

Dabei zeigt
- Figur 1: eine Ansicht einer Längenmesseinrichtung im angebauten Zustand;
- Figur 2: eine erste Ansicht eines Hohlprofils der Längenmesseinrichtung;
- Figur 3: eine zweite Ansicht des Hohlprofils ohne Maßstab;
- Figur 4: die zweite Ansicht des Hohlprofils mit Maßstab;
- Figur 5: eine erste Ansicht eines Befestigungselements des Hohlprofils;
- Figur 6: eine zweite Ansicht des Befestigungselements des Hohlprofils;
- Figur 7: eine dritte Ansicht des Befestigungselements des Hohlprofils, und
- Figur 8: eine weitere Ausgestaltung eines Befestigungselements.

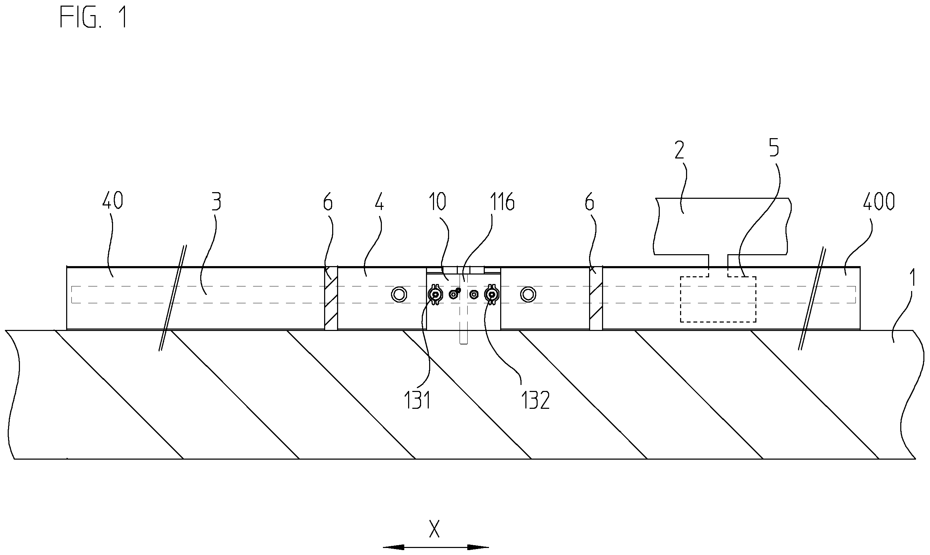

Die Figur 1 zeigt eine Längenmesseinrichtung zur Messung der Position zweier relativ zueinander verschiebbarer Objekte 1, 2. Die Längenmesseinrichtung ist ein sogenanntes gekapseltes System, bei dem ein Maßstab 3 (hier nur schematisch dargestellt) innerhalb eines Hohlprofils 4 in Messrichtung X verlaufend angeordnet ist und der eine Messteilung des Maßstabs 3 abtastende Abtastkopf 5 ebenfalls geschützt innerhalb des Hohlprofils 4 angeordnet ist. Der Abtastkopf 5 ist im Hohlprofil 4 in Messrichtung X geführt, indem dieser sich am Hohlprofil 4 und / oder am Maßstab 3 abstützt, beispielsweise mittels Rollen. Das Hohlprofil 4 ist mit einem der beiden zu messenden Objekte 1 verbunden und der Abtastkopf 5 ist mit dem anderen der zu messenden Objekte 2 verbunden. Diese Verbindung des Abtastkopfes 5 mit dem zu messenden Objekt 2 erfolgt in bekannter Weise über einen schwertförmig ausgebildeten Mitnehmer, der durch einen in Messrichtung X verlaufenden Schlitz 41 nach außen geführt ist. Der Schlitz 41 des Hohlprofils 4 ist durch Dichtlippen (die aus Gründen der Übersichtlichkeit nicht dargestellt sind) abgedichtet, um das Eindringen von Schmutz und Spritzwasser in das Innere des Hohlprofils 4 zu vermeiden.

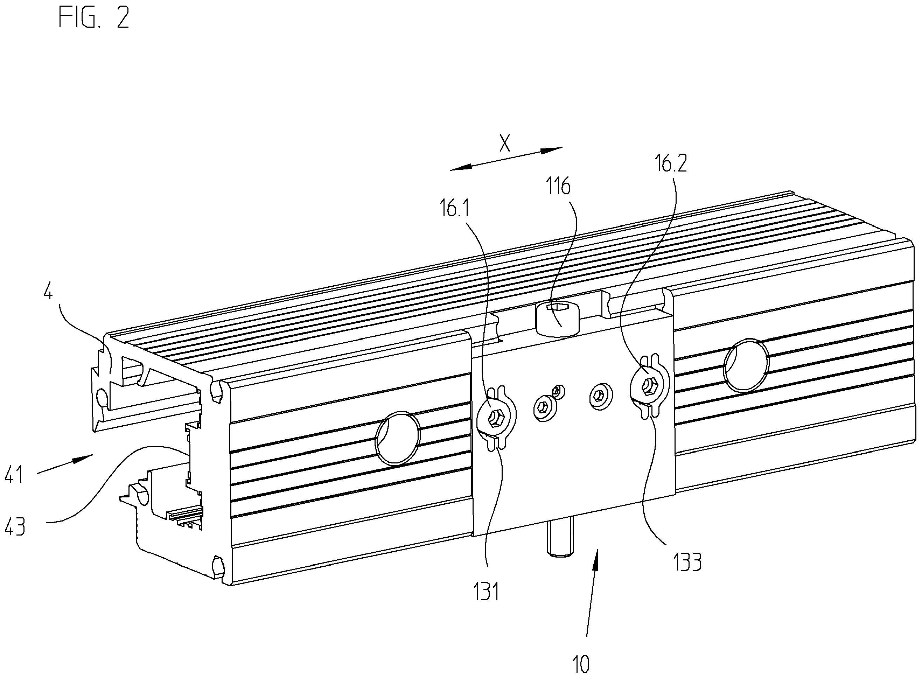

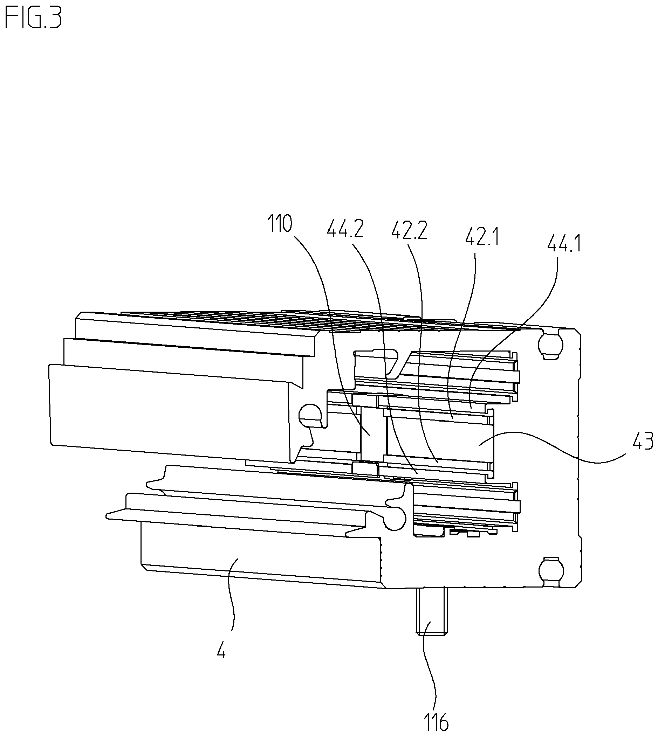

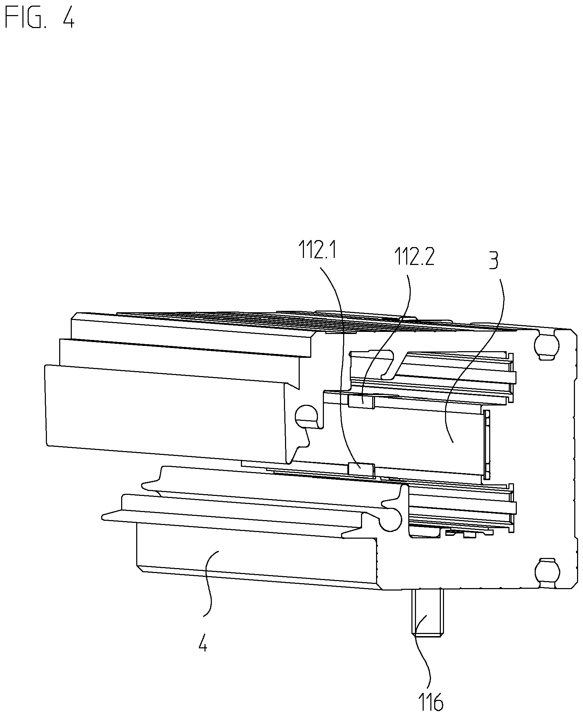

Der Maßstab 3 ist vorzugsweise ein flexibles dünnes Maßband, das in Messrichtung längsstabil, aber biegbar ist, weshalb insbesondere ein Stahlband geeignet ist. Der Maßstab 3 trägt auf seiner Oberseite eine lichtelektrisch abtastbare Messteilung, die vom Abtastkopf 5 im sogenannten Auflichtverfahren abgetastet wird und liegt mit seiner Unterseite auf einer Auflagefläche in Form von Stegen 42.1, 42.2 des Hohlprofils 4 auf. Eine Nut 43 des Hohlprofils 4 bildet einerseits die Auflagefläche (im Beispiel die Stege 42.1, 42.2) für den Maßstab 3 und andererseits weist sie in vorteilhafter Weise beidseitig Falze 44.1, 44.2 auf, die einen beidseitigen Umgriff für den Maßstab 3 bilden. Die Nut 43 bildet einen Zwischenraum, in den der Maßstab 3 zwar in Messrichtung X eingeschoben werden kann, er jedoch in den Richtungen quer dazu nur ein vernachlässigbares Spiel aufweist. In den Figuren 2 und 3 ist die Nut 43 ohne eingebrachten Maßstab 3 dargestellt und in Figur 4 mit darin eingeschobenem Maßstab 3.

Die Nut 43 bildet eine Führung des Hohlprofils, in welcher der Maßstab in Messrichtung reibungsarm verschiebbar gelagert ist. Diese Führung ist weiterhin derart ausgebildet, dass der Maßstab 3 in den restlichen 5 Freiheitsgraden festgelegt ist.

In der Figur 1 ist dargestellt, wie die Längenmesseinrichtung zur Messung großer Messlängen ausgebildet ist. An dem einen zu messenden Objekt 1 werden mehrere Hohlprofile 4, 40, 400 in Messrichtung X hintereinander angeordnet. Die Verbindungsstellen zwischen jeweils zweier angrenzender Hohlprofile 4, 40, 400 sind gegenseitig mittels Dichtungen 6 abgedichtet. Nach der Montage der einzelnen Hohlprofile 4, 40, 400 am zu messenden Objekt 1 wird der Maßstab 3 in die Nut 43 der Hohlprofile 4, 40, 400 eingeschoben bzw. eingezogen. Der Maßstab 3 erstreckt sich dabei einstückig über alle Hohlprofile 4, 40, 400 hinweg.

Das Hohlprofil 4 weist ein Befestigungselement 10 auf, das einerseits zur Bildung eines Nullpunktes bzw. Bezugspunktes des Maßstabs 3 relativ zum messenden Objekt 1 ausgebildet ist und das andererseits am Hohlprofil 4 in Messrichtung X entkoppelt angebracht ist. Hierzu weist das Befestigungselement 10 einen ersten Abschnitt 11 auf, der dazu ausgelegt ist, den Maßstab 3 ortsfest daran festzulegen. Darüber hinaus ist der erste Abschnitt 11 dazu ausgelegt, am zu messenden Objekt 1 ortsfest fixiert zu werden. Dadurch wird der Maßstab 3 an der Position -in Messrichtung X betrachtet- am ersten Abschnitt 11 ortsfest fixiert, an der der erste Abschnitt 11 auch am zu messenden Objekt 1 ortsfest fixiert wird.

Der Maßstab 3 ist beidseitig des ersten Abschnitts 11 relativ zum Hohlprofil 4 in Messrichtung X verlaufend angeordnet, so dass sich das Befestigungselement 10 innerhalb des Messbereiches befindet. Der Maßstab 3 ist über seine gesamte Länge ausschließlich über das Befestigungselement 10 am zu messenden Objekt ortsfest fixierbar. Das bedeutet, dass der Maßstab 3 beidseits des Befestigungselementes 10 über seine gesamte Länge einerseits vom Hohlprofil 4 derart entkoppelt angebracht ist, dass relative Längenänderungen zwischen dem Maßstab 3 und dem Hohlprofil 4 möglich sind und andererseits außer am Bezugspunkt auch nicht mit dem zu messenden Objekt 1 ortsfest verbunden ist. Diese entkoppelte Anordnung des Maßstabs 3 kann durch Auflage des Maßstabes 3 am Grund der Nut 43 realisiert sein, wobei zwischen dem Grund der Nut 43 und dem Maßstab 3 zusätzlich reibungsvermindernde Mittel vorgesehen sein können, beispielsweise in Form einer Zwischenschicht.

Die ortsfeste Fixierung des Maßstabs 3 am ersten Abschnitt 11 erfolgt vorzugsweise durch Klemmung, mit dem Vorteil, dass die Fixierung lösbar ist, so dass der Maßstab 3 bei Bedarf aus dem Hohlprofil 4 einfach entfernt werden kann.

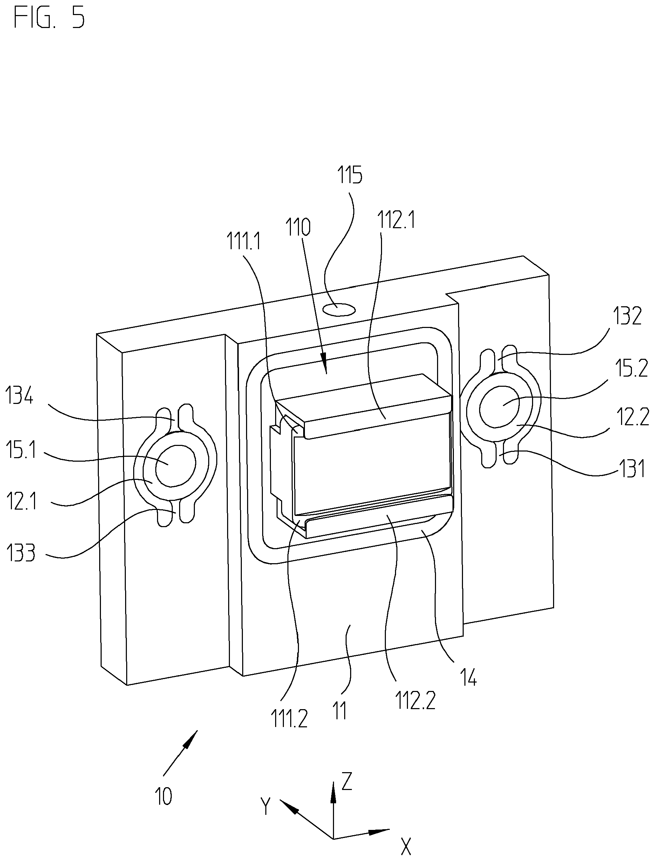

Ein erstes Ausführungsbeispiel eines vorteilhaft ausgestalteten Befestigungselements 10 ist in den Figuren 5 bis 7 in verschiedenen Ansichten dargestellt. Zur ortsfesten Klemmung des Maßstabs 3 am ersten Abschnitt 11 weist dieser einen Klemmmechanismus 110 auf, mit dem der Maßstab 3 am ersten Abschnitt 11 klemmbar ist. Der Klemmmechanismus 110 weist hierzu ein Auflageelement zur Auflage des Maßstabs 3 mit seiner Unterseite auf. Das Auflageelement weist zwei quer zur Messrichtung X voneinander beabstandete Auflagen 111.1, 111.2 auf, derart, dass der Maßstab 3 nur an den beiden Rändern aufliegt und mittig freiliegt. Weiterhin weist der Klemmmechanismus 110 zwei Widerlager 112.1, 112.2 auf, die bei der Klemmung mit der Oberseite des Maßstabs 3 in Kontakt treten und diesen zwischen den Flächen der Auflagen 111.1, 111.2 und den Widerlagern 112.1, 112.2 einklemmt. Die Widerlager 112.1, 112.2 umfassen im dargestellten Beispiel zwei Falze, die bei der Klemmung an den beiden Rändern mit der Oberseite des Maßstabs 3 in Kontakt treten. Die beiden Falze lassen die dazwischen verlaufende Messteilung des Maßstabs 3 frei, so dass diese ungehindert vom Abtastkopf 5 abgetastet werden kann.

Das Auflageelement (im Beispiel mit den zwei stegförmigen Auflagen 111.1, 111.2) ist in Richtung des Widerlagers (im Beispiel die beiden stegförmigen Widerlager 112.1, 112.2) senkrecht zur Messrichtung X verlagerbar. Diese Verlagerung wird durch Schrauben 113 realisiert. Um bei der Montage den Maßstab 3 zwischen der Auflage und dem Widerlager möglichst einfach einführen zu können, kann die Auflage mittels einer Schraube 114 von dem Widerlager zurückgezogen werden.

Zum Klemmen des Maßstabes 3 kann alternativ auch das Widerlager 112.1, 112.2 zu den Auflagen 111.1, 111.2 hin verlagerbar ausgebildet sein.

Zur Erhöhung der Klemmwirkung, also der Haftreibung, ist vorzugsweise zumindest eine der Klemmflächen aufgeraut, beispielsweise durch Sandstrahlen oder Ätzen. Die ortsfeste Fixierung des Maßstabs 3 am ersten Abschnitt 11 kann zusätzlich durch Formschluss verbessert werden.

Der Klemmmechanismus 110 ist derart gestaltet, dass die Klemmung lösbar ist. Zur Aktivierung und Deaktivierung der Klemmung ist das Betätigungselement, beispielsweise in Form einer oder mehrerer Schrauben 113, von außen zugänglich und quer zur Messrichtung X betätigbar.

Die Auflagen 111.1 und 111.2 und / oder die Widerlager 112.1 und 112.2 weisen an ihren beiden Enden Einführschrägen zum leichten Einführen des Maßstabes 3 auf, wie insbesondere in Figur 5 ersichtlich ist. Der zwischen den Auflagen 111.1, 111.2 und den Widerlagern 112.1, 112.2 jeweils ausgebildete Spalt ist endseitig am größten und nimmt bis zum Klemmbereich kontinuierlich ab.

Der erste Abschnitt 11 des Befestigungselementes 10 ist darüber hinaus zusätzlich dazu ausgebildet, es an dem zu messenden Objekt 1 ortsfest zu fixieren. Hierzu weist der erste Abschnitt 11 eine Bohrung 115 zur Aufnahme einer Schraube 116 auf, die bei der ortsfesten Fixierung des ersten Abschnitts 11 mit dem zu messenden Objekt 1 korrespondiert.

Das Befestigungselement 10 weist darüber hinaus zumindest einen zweiten Abschnitt auf, mit dem es am Hohlprofil 4 befestigt ist. Im Beispiel ist der zweite Abschnitt durch zwei Teilabschnitte 12.1 und 12.2 gebildet. Die Befestigung am Hohlprofil 4 erfolgt derart, dass zwischen dem ersten Abschnitt 11 und dem zweiten Abschnitt 12.1, 12.2 ein Längenausgleich in Messrichtung X ermöglicht ist. Hierzu ist zumindest ein Längenausgleichselement, insbesondere ausgebildet als eine Festkörpergelenkanordnung 131, 132, 133, 134, vorgesehen, das eine Bewegung des ersten Abschnitts 11 relativ zum zweiten Abschnitt 12.1, 12.2 in Messrichtung X ermöglicht.

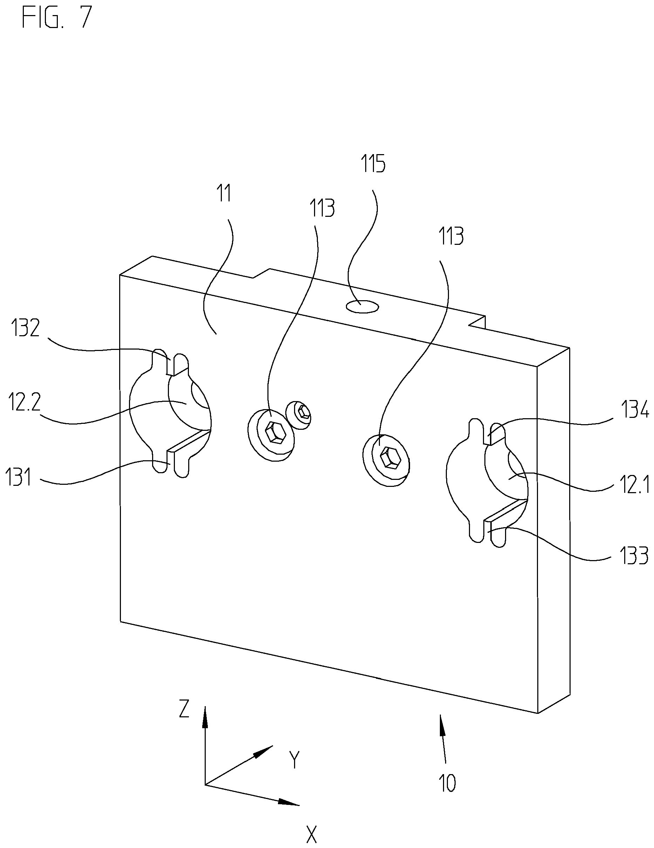

Die Anordnung der Festkörpergelenke 131, 132, 133, 134 ist vorzugsweise derart ausgebildet, dass sie ausschließlich eine Relativbewegung des ersten Abschnitts 11 relativ zum zweiten Abschnitt 12.1, 12.2 in Messrichtung X zulässt und Bewegungen in alle anderen Richtungen sperrt. Hierzu ist jedes Festkörpergelenk 131, 132, 133, 134 als stegförmiges Element ausgebildet, das senkrecht zur Messrichtung X verläuft und das ausschließlich in Messrichtung X auslenkbar ist. Die stegförmigen Elemente sperren eine Bewegung des ersten Abschnitts 11 relativ zum zweiten Abschnitt 12.1, 12.2 in Richtungen, in denen diese verlaufen, also in y- und Z-Richtung (in Figur 7 dargestellt).

Die Anordnung der Festkörpergelenke 131, 132, 133, 134 ist beispielhaft eine symmetrische Anordnung beidseitig des ersten Abschnitts 11. Der zweite Abschnitt umfasst hierfür zwei in Messrichtung X voneinander beabstandete Teilabschnitte 12.1, 12.2, wobei jeweils zwischen einem der beiden Teilabschnitte 12.1, 12.2 und dem ersten Abschnitt 11 zumindest ein Festkörpergelenk 131, 132, 133, 134 angeordnet ist. Die als stegförmige Elemente ausgebildeten Festkörpergelenke 131, 132, 133, 134 gehen jeweils vom ersten Abschnitt 11 aus und verlaufen zum zweiten Abschnitt (im Beispiel zumindest zu einem der beiden Teilabschnitte 12.1, 12.2) senkrecht zur Messrichtung X und sind in Messrichtung X ähnlich einer Blattfeder auslenkbar. Der zweite Abschnitt -hier in Form von zwei Teilabschnitten 12.1, 12.2- ist durch Schrauben 16.1, 16.2 an dem Hohlprofil 4 befestigt. Hierzu weist jeder der beiden Teilabschnitte 12.1, 12.2 eine Bohrung 15.1, 15.2 auf.

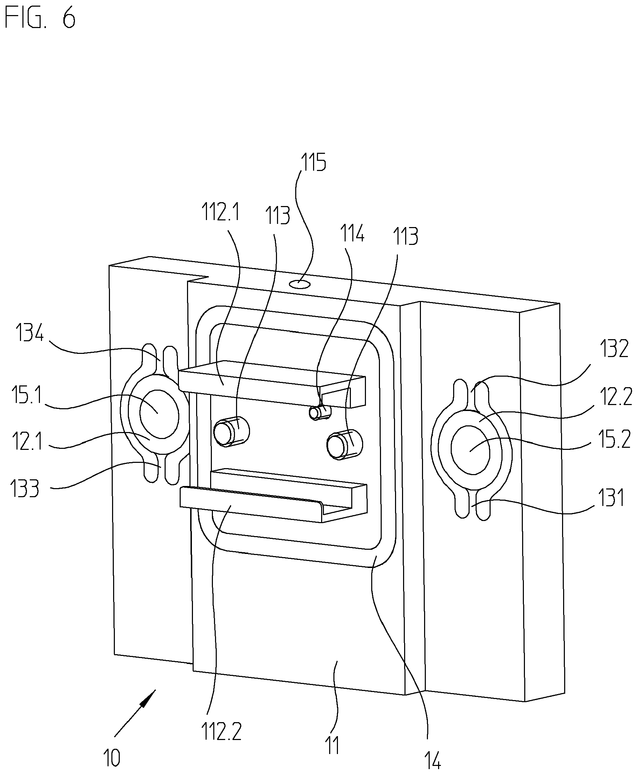

Das Befestigungselement 10 mit dem ersten Abschnitt 11 und dem zumindest einen zweiten Abschnitt 12.1, 12.2 ist in Form eines Einsatzteils ausgebildet, das von außen an das Hohlprofil 4 anbaubar ist. Hierzu weist das Hohlprofil 4 eine von außen zugängliche Öffnung auf, durch die der Klemmmechanismus 110 des ersten Abschnitts 11 in den Innenraum des Hohlprofils 4 hineinragt, wie aus der Figur 3 ersichtlich ist. Diese seitliche Öffnung des Hohlprofils 4 wird durch eine Dichtung 14, insbesondere eine Flachdichtung, abgedichtet, die zwischen einer Seitenwand des Holprofils 4 und dem Befestigungselement 10 angeordnet ist. Diese Dichtung 14 ist insbesondere in den Figuren 5 und 6 dargestellt. Die Dichtung 14 ist jeweils - in Messrichtung X betrachtet - zwischen dem ersten Abschnitt 11 und den Festkörpergelenken 131, 132, 133, 134 angeordnet. Da dadurch die Dichtung 14 nicht in Messrichtung X auf Kompression beansprucht wird, ist die durch sie hervorgerufene Krafteinleitung in Messrichtung X vernachlässigbar.

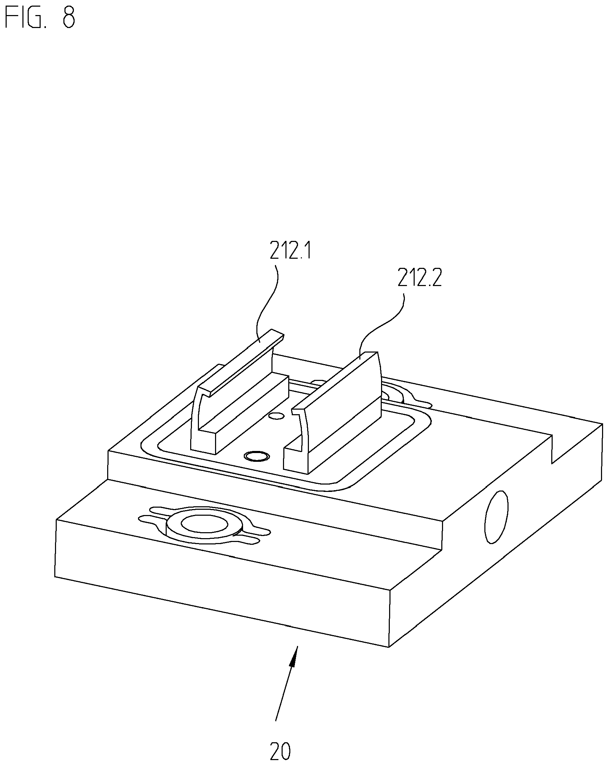

In Figur 8 ist eine weitere Ausgestaltung eines Befestigungselementes 20 dargestellt. Im Unterschied zu dem vorstehend erläuterten Befestigungselement 10 verlaufen die Widerlager in Form von Falzen 212.1, 212.2 im ungeklemmten Zustand nicht parallel zum Maßstab 3, sondern sie weisen mit ihren freien Enden in Richtung des Maßstabes 3 (insbesondere als Maßband ausgebildet). Diese Maßnahme dient zur Kompensation der Durchbiegung bei Krafteinleitung durch den eigentlichen Klemmvorgang. Eine Verformung (Wölbung quer zur Messrichtung X) des Maßstabes 3 wird dadurch vermieden, die Messgenauigkeit der Längenmesseinrichtung wird durch den Klemmvorgang nicht nachteilig beeinflusst.

Ist eine hochgenaue Positionsmessung gewünscht, wird die Messteilung des Maßstabs lichtelektrisch abtastbar ausgestaltet. Die Messteilung kann alternativ auch magnetisch, kapazitiv oder induktiv abtastbar ausgestaltet sein.

## Patentansprüche

1. Längenmesseinrichtung zur Messung der Position zweier relativ zueinander verschiebbarer Objekte (1, 2) in einer Messrichtung X, mit einem Hohlprofil (4);
einem Maßstab (3), der innerhalb des Hohlprofils (4) angeordnet ist; einem Befestigungselement (10, 20), das einen ersten Abschnitt (11) aufweist, der dazu ausgelegt ist, einerseits den Maßstab (3) in Messrichtung X ortsfest daran festzulegen und andererseits den ersten Abschnitt (11) an einem der zu messenden Objekte (1) in Messrichtung X ortsfest zu fixieren, wobei
das Befestigungselement (10, 20) zumindest einen zweiten Abschnitt (12.1, 12.2) aufweist, mit dem es am Hohlprofil (4) befestigt ist, und wobei
zwischen dem ersten Abschnitt (11) und dem zweiten Abschnitt (12.1, 12.2) des Befestigungselements (10, 20) zumindest ein Längenausgleichselement (131, 132, 133, 134) vorgesehen ist, das dazu ausgebildet ist, um Bewegungen des ersten Abschnittes (11) relativ zum zweiten Abschnitt (12.1, 12.2) in Messrichtung (X) zu ermöglichen.

2. Längenmesseinrichtung nach Anspruch 1, **dadurch gekennzeichnet, dass** das Längenausgleichselement (131, 132, 133, 134) derart ausgebildet ist, dass es Bewegungen des ersten Abschnitts (11) relativ zum zweiten Abschnitt (12.1, 12.2) ausschließlich in Messrichtung X ermöglicht und Bewegungen in allen anderen Richtungen Y, Z sperrt.

3. Längenmesseinrichtung nach Anspruch 2, **dadurch gekennzeichnet, dass** das Längenausgleichselement (131, 132, 133, 134) eine Anordnung von Festkörpergelenken ist.

4. Längenmesseinrichtung nach Anspruch 3, **dadurch gekennzeichnet, dass** die Festkörpergelenke jeweils einen senkrecht zur Messrichtung X verlaufenden biegbaren Steg aufweisen, der zwischen dem ersten Abschnitt (11) und dem zweiten Abschnitt (12.1, 12.2) verläuft.

5. Längenmesseinrichtung nach einem der vorhergehenden Ansprüche, **dadurch gekennzeichnet, dass** der erste Abschnitt (11) des Befestigungselements (10, 20) dazu ausgelegt ist, den Maßstab (3) durch Klemmung an diesem ersten Abschnitt (11) ortsfest zu fixieren.

6. Längenmesseinrichtung nach Anspruch 5, **dadurch gekennzeichnet, dass** der erste Abschnitt (11) quer zur Messrichtung X voneinander beabstandete Auflagen (111.1, 111.2) zur Auflage des Maßstabes (3) mit seiner Unterseite aufweist, und dass der erste Abschnitt (11) zwei quer zur Messrichtung X voneinander beabstandete Widerlager (112.1, 112.2) aufweist, die bei der Klemmung mit der Oberseite des Maßstabs (3) in Kontakt treten und den Maßstab (3) zwischen den Auflagen (111.1, 111.2) und den Widerlagern (112.1, 112.2) einklemmen.

7. Längenmesseinrichtung nach einem der vorhergehenden Ansprüche, **dadurch gekennzeichnet, dass** der erste Abschnitt (11) eine Bohrung (115) zur Aufnahme einer Schraube (116) aufweist, die bei der ortsfesten Fixierung des ersten Abschnitts (11) mit einem der zu messenden Objekte (1, 2) korrespondiert.

8. Längenmesseinrichtung nach einem der vorhergehenden Ansprüche, **dadurch gekennzeichnet, dass** der zweite Abschnitt (12.1, 12.2) zwei in Messrichtung X voneinander beabstandete Teilabschnitte umfasst, wobei jeweils zwischen einem der beiden Teilabschnitte und dem ersten Abschnitt (11) zumindest ein Längenausgleichselement (131, 132, 133, 134) angeordnet ist.

9. Längenmesseinrichtung nach Anspruch 8, **dadurch gekennzeichnet, dass** jeder der Teilabschnitte mittels einer Schraube (16.1, 16.2) an dem Hohlprofil (4) befestigt ist.

10. Längenmesseinrichtung nach einem der vorhergehenden Ansprüche, **dadurch gekennzeichnet, dass** der Maßstab (3) ein Maßband ist.

11. Längenmesseinrichtung nach einem der vorhergehenden Ansprüche, **dadurch gekennzeichnet, dass** das Hohlprofil (4) eine in Messrichtung X verlaufende Nut (43) aufweist, in der der Maßstab (3) angeordnet ist.

12. Längenmesseinrichtung nach einem der vorhergehenden Ansprüche, **dadurch gekennzeichnet, dass** es mehrere in Messrichtung X hintereinander angeordneten Hohlprofile (4, 40, 400) umfasst, die an ihren Verbindungsstellen jeweils mittels elastischer Dichtmittel (6) abgedichtet sind, und sich der Maßstab (3) über die mehrere Hohlprofile (4, 40, 400) erstreckt, wobei eines dieser Hohlprofile (4, 40, 400) das Befestigungselement (10, 20) aufweist.

13. Längenmesseinrichtung nach Anspruch 12, **dadurch gekennzeichnet, dass** der Maßstab (3) über seine gesamte Länge ausschließlich am Befestigungselement (10, 20) in Messrichtung X ortsfest festgelegt ist und ansonsten längsverschiebbar gegenüber den mehreren Hohlprofilen (4, 40, 400) sowie dem zu messenden Objekt (1, 2) angeordnet ist.

## Claims

1. Length-measuring device by means of which the position of two objects (1, 2) which can be displaced relative to one another if measured in a measuring direction X, having a hollow profile (4); having a measuring-scale member (3), which is arranged within the hollow profile (4);
having a fastening element (10, 20), which has a first portion (11) which is designed, on the one hand, to secure the measuring-scale member (3) in a stationary manner, as seen in the measuring direction X, thereon and, on the other hand, to fix the first portion (11) in a stationary manner, as seen in the measuring direction X, on one of the objects (1) which is to be measured, wherein
the fastening element (10, 20) has at least a second portion (12.1, 12.2), by means of which it is fastened on the hollow profile (4), and wherein
at least one length-compensating element (131, 132, 133, 134) is provided between the first portion (11) and the second portion (12.1, 12.2) of the fastening element (10, 20), the length-compensating element being designed to provide for movements of the first portion (11) relative to the second portion (12.1, 12.2) in the measuring direction X.

2. Length-measuring device according to Claim 1, **characterized in that** the length-compensating element (131, 132, 133, 134) is designed such that it provides for movements of the first portion (11) relative to the second portion (12.1, 12.2) exclusively in the measuring direction X and blocks movements in all other directions Y, Z.

3. Length-measuring device according to Claim 2, **characterized in that** the length-compensating element (131, 132, 133, 134) is an arrangement of solid-body joints.

4. Length-measuring device according to Claim 3, **characterized in that** the solid-body joints each have a flexible crosspiece which runs perpendicularly to the measuring direction X, between the first portion (11) and the second portion (12.1, 12.2).

5. Length-measuring device according to one of the preceding claims, **characterized in that** the first portion (11) of the fastening element (10, 20) is designed to fix the measuring-scale member (3) in a stationary manner on said first portion (11) by clamping actions.

6. Length-measuring device according to Claim 5, **characterized in that** the first portion (11) has supports (111.1, 111.2), which are spaced apart from one another in the direction transverse to the measuring direction X and are intended for supporting the measuring-scale member (3) by way of the underside thereof, and **in that** the first portion (11) has two abutments (112.1, 112.2), which are spaced apart from one another in a direction transverse to the measuring direction X and, during the clamping operation, come into contact with the upper side of the measuring-scale member (3) and clamp the measuring-scale member (3) in between the supports (111.1, 111.2) and the abutments (112.1, 112.2).

7. Length-measuring device according to one of the preceding claims, **characterized in that** the first portion (11) has a bore (115) for accommodating a screw (116) which, when the first portion (11) is fixed in the stationary manner, corresponds with one of the objects (1, 2) which is to be measured.

8. Length-measuring device according to one of the preceding claims, **characterized in that** the second portion (12.1, 12.2) comprises two sub-portions spaced apart from one another in the measuring direction X, wherein at least one length-compensating element (131, 132, 133, 134) is arranged in each case between one of the two sub-portions and the first portion (11).

9. Length-measuring device according to Claim 8, **characterized in that** each of the sub-portions is fastened on the hollow profile (4) by means of a screw (16.1, 16.2).

10. Length-measuring device according to one of the preceding claims, **characterized in that** the measuring-scale member (3) is a measuring strip.

11. Length-measuring device according to one of the preceding claims, **characterized in that** the hollow profile (4) has a groove (43), which runs in the measuring direction X and in which the measuring-scale member (3) is arranged.

12. Length-measuring device according to one of the preceding claims, **characterized in that** it comprises a plurality of hollow profiles (4, 40, 400), which are arranged one behind the other in the measuring direction X and are sealed at their connecting locations in each case by way of elastic sealing means (6), and the measuring-scale member (3) extends over the plurality of hollow profiles (4, 40, 400), wherein one of these hollow profiles (4, 40, 400) has the fastening element (10, 20).

13. Length-measuring device according to Claim 12, **characterized in that**, over its entire length, the measuring-scale member (3) is secured in a stationary manner, as seen in the measuring direction X, exclusively on the fastening element (10, 20) and otherwise is arranged in a longitudinally displaceable manner in relation to the plurality of hollow profiles (4, 40, 400) and the object (1, 2) which is to be measured.

## Revendications

1. Dispositif de mesure de longueur pour la mesure de la position de deux objets déplaçables l'un par rapport à l'autre (1, 2) dans une direction de mesure X, comprenant un profilé creux (4) ;
une échelle de mesure (3) qui est disposée à l'intérieur du profilé creux (4) ;
un élément de fixation (10, 20), qui présente une première portion (11) qui est conçue d'une part pour fixer en position fixe l'échelle (3) dans la direction de mesure X sur celui-ci et d'autre part pour fixer en position fixe la première portion (11) à l'un des objets (1) à mesurer, dans la direction de mesure X,
l'élément de fixation (10, 20) présentant au moins une deuxième portion (12.1, 12.2) avec laquelle il est fixé au profilé creux (4) et
entre la première portion (11) et la deuxième portion (12.1, 12.2) de l'élément de fixation (10, 20) étant prévu au moins un élément de compensation de longueur (131, 132, 133, 134) qui est réalisé pour permettre des mouvements de la première portion (11) par rapport à la deuxième portion (12.1, 12.2) dans la direction de mesure X.

2. Dispositif de mesure de longueur selon la revendication 1, **caractérisé en ce que** l'élément de compensation de longueur (131, 132, 133, 134) est réalisé de telle sorte qu'il permette des mouvements de la première portion (11) par rapport à la deuxième portion (12.1, 12.2) exclusivement dans la direction de mesure X, et bloque des mouvements dans toutes les autres directions Y, Z.

3. Dispositif de mesure de longueur selon la revendication 2, **caractérisé en ce que** l'élément de compensation de longueur (131, 132, 133, 134) est un agencement d'articulations de corps solides.

4. Dispositif de mesure de longueur selon la revendication 3, **caractérisé en ce que** les articulations de corps solides présentent à chaque fois une nervure flexible s'étendant perpendiculairement à la direction de mesure X, qui s'étend entre la première portion (11) et la deuxième portion (12.1, 12.2).

5. Dispositif de mesure de longueur selon l'une quelconque des revendications précédentes, **caractérisé en ce que** la première portion (11) de l'élément de fixation (10, 20) est conçue de manière à fixer en position fixe l'échelle de mesure (3) par serrage sur cette première portion (11) .

6. Dispositif de mesure de longueur selon la revendication 5, **caractérisé en ce que** la première portion (11) présente des appuis (111.1, 111.2) espacés les uns des autres transversalement à la direction de mesure X, pour l'appui de l'échelle de mesure (3) avec son côté inférieur, et **en ce que** la première portion (11) présente deux butées (112.1, 112.2) espacées l'une de l'autre transversalement à la direction de mesure X, qui viennent en contact lors du serrage avec le côté supérieur de l'échelle de mesure (3) et qui serrent l'échelle de mesure (3) entre les appuis (111.1, 111.2) et les butées (112.1, 112.2).

7. Dispositif de mesure de longueur selon l'une quelconque des revendications précédentes, **caractérisé en ce que** la première portion (11) présente un alésage (115) pour recevoir une vis (116), qui, lors de la fixation en position fixe de la première portion (11), correspond à l'un des objets (1, 2) à mesurer.

8. Dispositif de mesure de longueur selon l'une quelconque des revendications précédentes, **caractérisé en ce que** la deuxième portion (12.1, 12.2) comprend deux portions partielles espacées l'une de l'autre dans la direction de mesure X, au moins un élément de compensation de longueur (131, 132, 133, 134) étant disposé à chaque fois entre l'une des deux portions partielles et la première portion (11).

9. Dispositif de mesure de longueur selon la revendication 8, **caractérisé en ce que** chacune des portions partielles est fixée au moyen d'une vis (16.1, 16.2) au profilé creux (4).

10. Dispositif de mesure de longueur selon l'une quelconque des revendications précédentes, **caractérisé en ce que** l'échelle de mesure (3) est un ruban de mesure.

11. Dispositif de mesure de longueur selon l'une quelconque des revendications précédentes, **caractérisé en ce que** le profilé creux (4) présente une rainure (43) s'étendant dans la direction de mesure X, dans laquelle est disposée l'échelle de mesure (3).

12. Dispositif de mesure de longueur selon l'une quelconque des revendications précédentes, **caractérisé en ce qu'**il comprend plusieurs profilés creux (4, 40, 400) disposés les uns derrière les autres dans la direction de mesure X, qui sont étanchéifiés au niveau de leurs zones de connexion à chaque fois par des moyens d'étanchéité élastiques (6), et l'échelle de mesure (3) s'étend sur la pluralité de profilés creux (4, 40, 400), l'un de ces profilés creux (4, 40, 400) présentant l'élément de fixation (10, 20) .

13. Dispositif de mesure de longueur selon la revendication 12, **caractérisé en ce que** l'échelle de mesure (3) est fixée en position fixe sur toute sa longueur exclusivement à l'élément de fixation (10, 20) dans la direction de mesure X et est par ailleurs disposée de manière déplaçable longitudinalement par rapport à la pluralité de profilés creux (4, 40, 400) et par rapport à l'objet à mesurer (1, 2).
